# EUROPEAN PATENT SPECIFICATION

(11) **EP 1 982 814 B1**
(45) Date of publication and mention of the grant of the patent: **19.12.2018**
(21) Application number: 06713128.4
(22) Date of filing: 06.02.2006
(51) Int. Cl.: B29B 9/14, B29B 11/16

(54) **PROCESS FOR PRODUCING PELLETS CONTAINING FLAT GLASS FIBERS**
VERFAHREN ZUR HERSTELLUNG VON FLACHEN GLASFASERN ENTHALTENDEN PELLETS
PROCÉDÉ DE FABRICATION DE PASTILLES CONTENANT DES FIBRES DE VERRE PLATES

(43) Date of publication of application: 22.10.2008
(73) Proprietor: NITTO BOSEKI CO., LTD., Fukushima-shi, Fukushima 960-8161 (JP)
(72) Inventor: ITOH, Hirotaka, Fukushima-shi, Fukushima 9608161 (JP)
(74) Representative: Vossius & Partner Patentanwälte Rechtsanwälte mbB
(86) International application number: PCT/JP2006/301985
(87) International publication number: WO 2007/091293

(56) References cited:
- EP-A- 1 582 553
- EP-A1- 1 039 004
- JP-A- 04 062 109
- JP-A- 06 023 742
- JP-A- 2004 285 487
- JP-A- 2005 349 697
- JP-A- 2006 045 390

## Description

### Technical Field

The present invention relates to a process for production of flat glass fiber-containing pellets.

### Background Art

Glass fiber-reinforced thermoplastic resin molded articles are generally produced by bundling glass fiber filaments and cutting them to a prescribed length to obtain glass fiber chopped strands, and then melt mixing these together with thermoplastic resin pellets and using the mixture for injection molding.

In such production processes, however, the glass fibers often become crushed during the injection molding, such that the fiber lengths of the glass fibers remaining in the final product are excessively short and have insufficient strength (tensile strength) and impact resistance. Moreover, the glass fiber filaments become oriented as the resin flows during injection molding, and thus create a directional property and induce warping in the molded article.

In order to solve this problem, a process has been proposed wherein injection molding is carried out using flat glass fibers with flat cross-sections instead of glass fiber chopped strands obtained from glass fiber filaments with circular cross-sections, and melt mixing these with a thermoplastic resin (Patent document 1). Pellets obtained by cutting long glass fibers impregnated with a thermoplastic resin have also been investigated (Patent document 2).
[Patent document 1] Japanese Examined Patent Publication HEI No. 2-60494
[Patent document 2] Japanese Unexamined Patent Publication HEI No. 5-9380

JP 2005-349697 discloses a method for producing fiber-reinforced resin pellets.

### Disclosure of the Invention

### Problems to be Solved by the Invention

In the process described in Patent document 1, the tensile strength is indeed improved and creation of a directional property in the molded articles is prevented, thus providing effects of surface smoothness and low warping. If a different thermoplastic resin used, however, the impact resistance (impact strength) is often reduced to the same level as glass fibers with circular cross-sections. This phenomenon becomes a notable problem especially when a polyamide resin is used as the thermoplastic resin. While the reason for this is not completely understood, it is conjectured that the effects of the melt viscosity of the thermoplastic resin and adhesion between the thermoplastic resin and glass fiber filaments disturbs the balance between the flow property and dispersibility of the fiber bundle in the thermoplastic resin during molding.

Also, while improvement in tensile strength and impact strength is achieved with the process described in Patent document 2, it is difficult to prevent warping and improve the surface smoothness.

It is therefore an object of the present invention to provide a process for producing a glass fiber-containing thermoplastic resin molded article having not
only excellent tensile strength but also superior impact strength, minimal warping and improved surface smoothness, even when a polyamide resin is used as the thermoplastic resin.
Also described herein is a starting material comprising glass fibers and a thermoplastic resin to be used for production of the glass fiber-containing thermoplastic resin molded article, as well as a process for its production.

### Means for Solving the Problems

In order to achieve the object stated above, the invention provides a process as defined in the claims.

By using such flat glass fiber-containing pellets to produce glass fiber-containing thermoplastic resin molded articles by injection molding, it is possible to minimize shortening of the glass fibers that results when the glass fibers become crushed during molding. This improves not only the tensile strength but also the impact strength of the molded articles, limits the phenomenon of a directional property in the molded articles, and prevents warping of the molded articles while improving their surface smoothness. In addition, this effect is exhibited regardless of the type of thermoplastic resin, and stable properties are obtained even with polyamide resins that have been problematic in the prior art.

The flat glass fiber filaments preferably have fiber lengths of 2-50 mm, and the number of flat glass fiber filaments arranged in each pellet is preferably 500-8000. Such a construction will allow the aforementioned effect to be exhibited more prominently.

The flat glass fiber-containing pellets may be efficiently produced by a production process in which a fiber bundle obtained by aligning together a plurality of long flat glass fiber filaments with flat cross-sections is drawn through the through-hole of a die with a through-hole, together with a molten thermoplastic resin, and the thermoplastic resin-attached fiber bundle obtained by drawing is then cut.

### Effect of the Invention

According to the invention there is provided a process for the production of glass fiber-containing thermoplastic resin molded articles having not only excellent tensile strength but also superior impact strength, minimal warping and improved surface smoothness, even when a polyamide resin is used as the thermoplastic resin.

Also described is a starting material comprising glass fibers and a thermoplastic resin to be used for production of the glass fiber-containing thermoplastic resin molded articles, as well as a process for its production.

### Brief Description of the Drawings

Fig. 1 is a perspective view of a flat glass fiber-containing pellet according to a first embodiment.
Fig. 2 is a front view, side view and plan view of a flat glass fiber-containing pellet according to a first embodiment.
Fig. 3 is a front view, side view and plan view of a flat glass fiber-containing pellet according to a second embodiment.
Fig. 4 is a drawing illustrating the long diameter and short diameter of a flat glass fiber filament.
Fig. 5 is a drawing of the cross-section (cocoon-shaped cross-section) of a flat glass fiber filament which is not part of the invention.
Fig. 6 is a cross-sectional view showing an aggregate of flat glass fiber filaments with cocoon-shaped cross-sections.
Fig. 7 is a general schematic drawing of a continuous production apparatus for continuous production of flat glass-containing pellets.

### Explanation of Symbols

10: Thermoplastic resin pellets, 10a: molten thermoplastic resin, 20: flat glass fiber filament, 21: flat glass fiber bundle, 22: wound pirn, 30: die, 31: through-hole, 40: puller, 50: cutter, 100: flat glass fiber-containing pellets according to first embodiment, 110: flat glass fiber-containing pellets according to second embodiment, 200: continuous production apparatus.

### Best Mode for Carrying Out the Invention

Preferred embodiments of the flat glass fiber-containing pellets, flat glass fiber-containing thermoplastic resin molded article and production process therefor will now be explained in detail with reference to the accompanying drawings. Corresponding elements will be referred to by like reference numerals and will be explained only once.

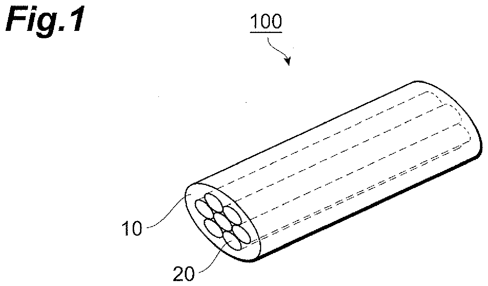

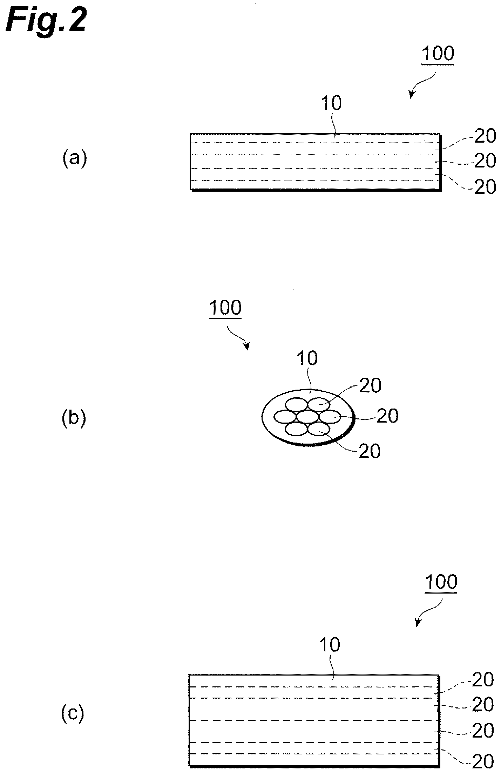

Fig. 1 is a perspective view of a flat glass fiber-containing pellet according to the first embodiment, and Fig. 2(a) is a front view, Fig. 2(b) is a side view and Fig. 2(c) is a plan view of a flat glass fiber-containing pellet according to the same embodiment.

As shown in Fig. 1 and Figs. 2(a)-(c), the flat glass fiber-containing pellet 100 according to the first embodiment comprises a plurality of flat glass fiber filaments 20 oriented in a single direction in a thermoplastic resin pellet 10.

As seen in the side view of Fig. 2(b), the cross-sections of the flat glass fiber filaments 20 are flat (non-circular), and the edges of the flat glass fiber filaments 20 reach to the surface of the pellet 10. Fig. 2(b) only shows one side (edge), but as is apparent from Figs. 2(a) and (c), the flat glass fiber filaments 20 also reach to the surface of the other side (edge).

The flat glass fiber-containing pellet 100 of the first embodiment is elliptic cylindrical, and it has two edges with the cross-sectional shape being roughly identical along the lengthwise direction. However, the flat glass fiber-containing pellet of the invention is not limited to this shape, and any of various other shapes, such as a cylindrical shape, may be employed.

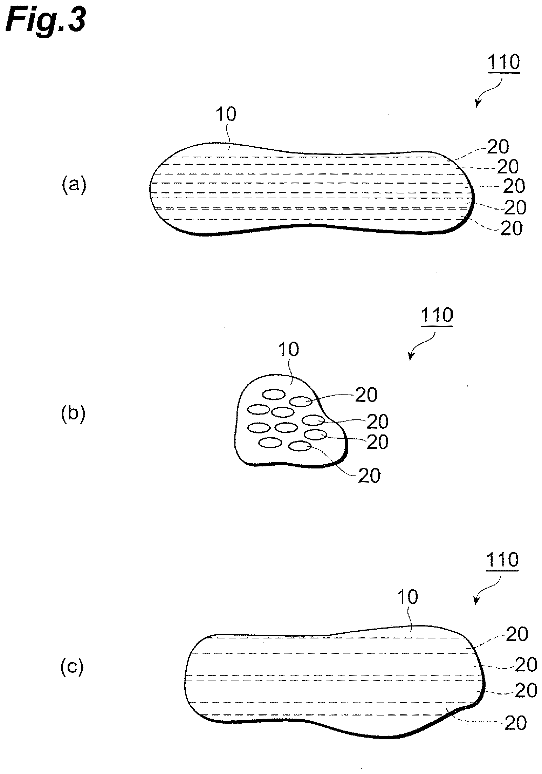

Fig. 3 shows a flat glass fiber-containing pellet (flat glass fiber-containing pellet according to the second embodiment) with a shape different from the shape of the first embodiment, and Figs. 3(a), (b) and (c) are the front view, side view and plan view thereof.

The flat glass fiber-containing pellet 110 of the second embodiment shown in Figs. 3(a)-(c) comprises a plurality of flat glass fiber filaments 20 oriented in a single direction in a thermoplastic resin pellet 10, and both edges of the flat glass fiber filaments 20 reach to the surfaces of the pellet 10. As seen in this set of drawings, the cross-section of the flat glass fiber-containing pellet 110 cut in the plane vertical to the lengthwise direction has an irregular cross-sectional shape that is neither circular nor elliptical. The cross-sectional shape cut along the lengthwise direction differs depending on the cutting location.

This flat glass fiber-containing pellet may have any apparent shape, but in order to obtain a glass fiber-containing thermoplastic resin with more excellent tensile strength, impact strength and surface smoothness when used for injection molding, the following optimal conditions are preferably employed.

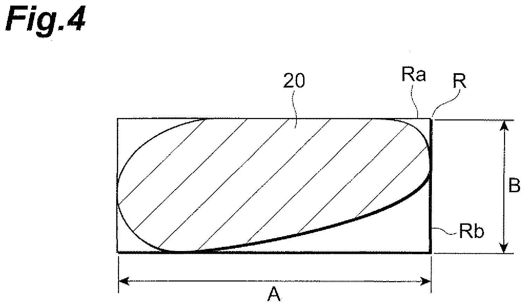

The flat glass fiber filament has a short diameter of b
4-15 µm, a long diameter of
15-80 µm and a compression in the range of 3-8.
The terms "short diameter", "long diameter" and "compression" will now be explained with reference to Fig. 4.

As shown in Fig. 4, the "long diameter" and "short diameter" correspond, respectively, to length A of the long side Ra of rectangle R (corresponding to the maximum dimension of the fiber cross-section), and to length B of the short side Rb of the same, where R is the rectangle of minimum area circumscribing the flat glass fiber filament 20. The "compression" is the ratio of the long side length to the short side length (A/B).

When a flat glass fiber filament with a short diameter of less than 3 µm or a flat glass fiber filament with a short diameter of longer than 20 µm is used, spinning becomes difficult and the spinning efficiency is reduced. The strength is especially reduced in molded articles obtained by injection molding of pellets containing flat glass fiber filaments with short diameters of longer than 20 µm. Also, a flat glass fiber filament with a long diameter of less than 6 µm or a flat glass fiber filament with a long diameter of longer than 100 µm results in difficult glass fiber filament spinning and tends to lower the spinning efficiency. Particularly with a long diameter of longer than 100 µm, the flattening efficiency is poor and the rigidity increases.

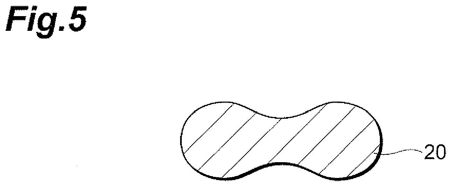

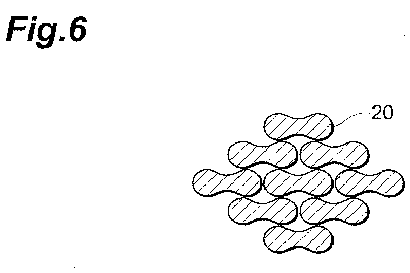

The term "flat" refers to non-circular shapes. The flat glass fiber filament 20 has an
elliptical cross-sectional shape, or a flat oval shape having linear Sections in the long diameter direction. A cocoon shape is seen
by the cross-sectional view in Fig. 5. When a plurality of flat glass fiber filaments are aligned in the pellet according to the invention, the long diameters of the flat glass fiber filaments are easily stacked so as to be oriented in roughly the same direction. The same is true when the cross-section of the flat glass fiber filaments 20 is cocoon-shaped, in which case they will tend to aggregate in a combination of dented and bulging sections as shown by the cross-sectional view in Fig. 6. The cross-sectional shapes of the flat glass fiber filaments may be appropriately selected based on the type of thermoplastic resin and the desired properties of the molded article.

The fiber lengths of the flat glass fiber filaments 20 are preferably 2-50 mm and more preferably 5-30 mm. If the fiber lengths of the flat glass fiber filaments 20 are less than 2 mm, the flat glass fiber-containing thermoplastic resin molded article that is produced may be poorly reinforced by the glass fibers, while if they are longer than 50 mm, the excessive fiber lengths will tend to cause bridging in the feed hopper of the injection molding machine, resulting in a non-uniform flow property in the thermoplastic resin during molding and potentially creating molding defects.

Since both ends of the flat glass fiber filaments 20 reach the surface of the pellet 10, the fiber lengths of the flat glass fiber filaments 20 are roughly equivalent to the length of the flat glass fiber-containing pellet. For example, if the fiber lengths of the flat glass fiber filaments 20 are 10 mm, the length of the flat glass fiber-containing pellet will also be about 10 mm.

The type of glass composing the flat glass fiber filaments 20 may be E glass, S glass, low dielectric glass or C glass, with E glass being preferred from the viewpoint of easier fiber formation.

The number of flat glass fiber filaments 20 in the flat glass fiber-containing pellet is preferably 500-8000 and more preferably 600-5000. If the number of flat glass fiber filaments 20 is less than 500 the pellet production efficiency will be reduced, and if the number of flat glass fiber filaments 20 exceeds 8000 the pellet will be too thick, tending to cause trouble during the pellet formation and to impair the resin impregnation property.

The flat glass fiber-containing pellet has a suitable content of the flat glass fiber filaments (the content of flat glass fiber filaments will hereunder be referred to as "glass content"). The glass content is preferably 10-60 wt% and more preferably 30-50 wt% based on the total weight of the flat glass fiber-containing pellet. A glass content of less than 10 wt% may result in an insufficient reinforcing effect by the glass fibers and may lower the strength of the molded article. A glass content of greater than 60 wt% may impair the resin impregnation property and lower the strength of the molded article.

A binder component is attached around the periphery of the flat glass fiber filaments 20 in the flat glass fiber-containing pellet (i.e. the interface between the flat glass fiber filaments and the thermoplastic resin). The binder is used for production of a fiber bundle comprising a plurality of bundled flat glass fiber filaments 20, and the fiber bundle is used in the process for production of the flat glass fiber-containing pellet as described hereunder.
The binder component includes film-forming agents comprising olefin-based resins (polyethylene, polypropylene and the like), urethane resins, acrylic resins, or epoxy resins.

As thermoplastic resins for the flat glass fiber-containing pellets there may be mentioned polyamide resins, polybutylene terephthalate resins, polycarbonate resins, polyphenylene sulfide resins, liquid crystal polymers, polystyrene resins, polypropylene resins, polyethylene resins, polyethylene terephthalate resins, acrylstyrene resins, ABS resins and the like, among which polyamide resins are preferred. Suitable polyamide resins include Nylon™ 6; Nylon™ 6,6; Nylon™ 6,10; Nylon™ 6,12; and aromatic polyamide resins. The thermoplastic resin used in the flat glass fiber-containing pellets may consist of a single component or a plurality of components.

The lengths of the flat glass fiber-containing pellets are preferably 2-50 mm as mentioned above. The pellet lengths are more preferably 5-30 mm.

The flat glass fiber-containing pellets are obtained by a process as defined in the claims in which a flat glass fiber bundle obtained by aligning together a
plurality of long flat glass fiber filaments with flat cross-sections is drawn through the through-hole of a die with a through-hole, together with a molten thermoplastic resin, and the thermoplastic resin-attached fiber bundle obtained by drawing is then cut.

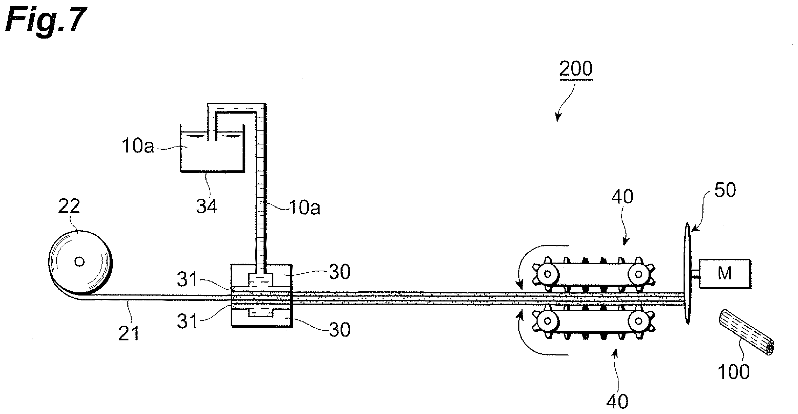

Flat glass fiber bundles are used in this production process, and the flat glass fiber bundles may be produced by a known glass fiber strand production process wherein a plurality of molten flat glass fiber filaments, drawn out from a flat glass fiber bushing, are bundled with a binder while cooling. The glass fiber strands may be wound up on a winding core and stored as a wound pirn. The wound pirn may be used in a continuous production apparatus such as shown in Fig. 7 for production of flat glass fiber-containing pellets.

Fig. 7 is a general schematic drawing of a continuous production apparatus 200 for continuous production of flat glass-containing pellets by the process of the invention. As shown in Fig. 7, the continuous production apparatus 200 comprises a thermoplastic resin tank 34 that contains a thermoplastic resin 10a that has been melted by heat, a die 30 having a through-hole 31 formed therein through which the flat glass fiber bundle 21 (the bundle of flat glass fiber filaments 20) passes together with the molten thermoplastic resin 10a, a puller 40 that pulls the thermoplastic resin-attached long flat glass fiber bundle from the die 30, and a cutter 50 that cuts the thermoplastic resin-attached long flat glass fiber bundle to the prescribed length to obtain flat glass fiber-containing pellets 100.

Upstream from the die 30 there is situated a wound pirn 22 on which the flat glass fiber bundle 21 to be introduced into the die 30 is wound. The puller 40 positioned downstream from the die 30 is a caterpillar-type puller that sandwiches the thermoplastic resin-attached long flat glass fiber bundle above and below by rotating rollers. The cutter 50 is a blade that rotates by the driving force of a motor M to cut the thermoplastic resin-attached long flat glass fiber bundle, and form flat glass fiber-containing pellets 100.

In order to use this continuous production apparatus 200 to produce flat glass fiber-containing pellets 100, first the puller 40 is driven to rotate, thereby rolling out the flat glass fiber bundle 21 from the wound pirn 22. The flat glass fiber bundle 21 that has been pulled out is then introduced into the through-hole 31 of the die 30 while a pump or the like is used to introduce the molten thermoplastic resin 10a into the through-hole 31. In the die 30, the molten thermoplastic resin 10a is attached to the periphery and interior of the flat glass fiber bundle 21 and taken up by the puller 40, so that the thermoplastic resin-attached long flat glass fiber bundle is pulled out from the die 30 with its cross-sectional shape, while being molded into a shape corresponding to the cross-sectional shape of the exit end of the through-hole 31. Next, the thermoplastic resin is solidified into a form suitable for cutting and cut with the cutter 50 to obtain flat glass fiber-containing pellets 100.

A single wound pirn 22 was used in Fig. 7, but several may also be used for introduction of flat glass fiber bundles 21 into a plurality of dies 30. Cooling means may also be situated toward the end of the die 30 to promote solidification of the molten thermoplastic resin. Also, molding means for adjusting the cross-sectional shape of the thermoplastic resin-attached long flat glass fiber bundle may be situated between the die 30 and the puller 40.

The flat glass fiber-containing pellets obtained thereby may be introduced into the feeder of a known injection molding machine and then, depending on the type of thermoplastic resin used, heat fused and injection molded into a prescribed shape. Thermoplastic resin pellets of the same or a different type than the flat glass fiber-containing pellets may also be added to the feeder of the injection molding machine, and additives commonly used for injection molding (antistatic agents, release agents and the like) may also be added.

Since the obtained flat glass fiber-containing thermoplastic resin molded article is produced using flat glass fiber-containing pellets according to the invention, it not only has improved tensile strength and impact strength, but also a reduced directional property of the molded article. Warping is also prevented and the surface smoothness is improved. In addition, this effect is exhibited regardless of the type of thermoplastic resin, and stable properties are obtained even with polyamide resins that have been problematic in the prior art.

### Examples

Preferred examples of the invention will now be described in greater detail, with the understanding that the invention is not limited to the examples.

### (Example 1)

### <Fabrication of pellets>

A flat glass filament (long flat glass fiber filament) having an E glass composition, with a short diameter of 8 µm and a long diameter of 31 µm (compression: 3.8, converted fiber size: 17 µm) was coated with a urethane-based binder and bundled in a count of 4000 to obtain a flat glass fiber bundle. The flat glass fiber bundle was introduced into molten Nylon™ 6,6 (LEONA 1300S, product of Asahi Kasei Corp.) for molten impregnation, passed through a die with a circular through-hole and then cut to lengths of 10 mm to fabricate pellets for Example 1 having a glass content of 40 mass%. The "converted fiber size" referred to here is the diameter of a circular cross-section fiber having a cross-sectional area equivalent to the flat glass fiber.

### <Fabrication of injection molded articles>

The pellets of Example 1 were used for injection molding with a cylinder temperature of 280°C, a mold temperature of 80°C and an injection pressure of 4 MPa, to fabricate test piece A and test piece B for Example 1. Test piece A was a test piece with a length of 100 mm, a width of 12 mm and a thickness of 3 mm having grips on both sides in the lengthwise direction, and test piece B was an 80 mm square plate test piece with a thickness of 1 mm.

### (Comparative Example 1)

### <Fabrication of pellets>

A flat glass filament having an E glass composition, with a short diameter of 7 µm and a long diameter of 27 µm (compression: 3.8, converted fiber size: 15 µm) was coated with a urethane-based binder and bundled in a count of 1600 to obtain a flat glass fiber bundle. The flat glass fiber bundle was cut to lengths of 3 mm to obtain flat glass fiber chopped strands. The obtained flat glass fiber chopped strands were subjected to melt kneading at a temperature of 280°C with Nylon 6,6 in the same manner as Example 1 and extruded from a die with a circular through-hole having a diameter of 5 mm, and then cut into lengths of 4 mm to fabricate pellets for Comparative Example 1 having a glass content of 40 wt%. The pellets of Comparative Example 1 did not have the flat glass fiber filaments arranged in a single direction. It was attempted to fabricate pellets using flat glass fiber chopped strands with lengths of 10 mm, but the chopped strands could not be loaded into the screw and melt kneading was not possible.

### <Fabrication of injection molded articles>

Test piece A and test piece B for Comparative Example 1 were fabricated by the same method as Example 1, except for using the pellets of Comparative Example 1.

### (Comparative Example 2)

Pellets, test piece A and test piece B were fabricated for Comparative Example 2 in the same manner as Example 1, except for using glass fibers with circular cross-sections having a diameter of 17 µm.

### (Comparative Example 3)

Pellets, test piece A and test piece B were fabricated for Comparative Example 3 in the same manner as Comparative Example 1, except for using glass fibers with circular cross-sections having a diameter of 11 µm.

The test pieces A obtained in Example 1 and Comparative Examples 1-3 were used for measurement of the tensile strength according to JIS K 7054, "Tensile Strength Test Method For Glass Fiber Reinforced Plastics". Also, the Charpy impact strength was measured according to JIS K7061 "Charpy Impact Test Method For Glass Fiber Reinforced Plastics", with the thickness direction as the impact direction.

Test piece A was heated at 625°C for 1 hour to burn the thermoplastic resin, after which the lengths of the remaining glass fibers were subjected to image analysis using a LUZEX FS real time image processor by Nireco Corp. and the remaining fiber lengths (lengths of the glass fiber filaments in the glass fiber-containing molded article) were determined.

The test pieces B obtained in Example 1 and Comparative Examples 1-3 were placed on a flat surface and the heights of the most swelled sections were measured for evaluation of warping. Using a SURFTEST 501 roughness meter by Mitsutoyo Corp., the differences between the heights at the highest and lowest points along a standard length of 0.8 mm were determined at 5 locations, and the mean values were calculated for evaluation of the surface smoothness. The evaluation results are summarized in Table 1 below.

**[Table 1]**

| | Example 1 | Comp. Ex. 1 | Comp. Ex. 2 | Comp. Ex. 3 |
|---|---|---|---|---|
| Remaining fiber length (µm) | 490 | 380 | 430 | 350 |
| Tensile strength (MPa) | 210 | 200 | 215 | 200 |
| Charpy impact strength (kJ/m²) | 72 | 64 | 61 | 73 |
| Warping (mm) | 5.0 | 7.2 | 17.1 | 17.4 |
| Surface smoothness (µm) | 2.1 | 2.5 | 5.7 | 7.3 |

The glass fiber filament of Example 1 had a smaller converted fiber size than the glass fiber filament of Comparative Example 1, and the glass fiber filament of Comparative Example 2 had a smaller diameter than the glass fiber filament of Comparative Example 3. It will be readily appreciated that, even with the same converted fiber sizes for the flat glass fiber filaments of Example 1 and Comparative Example 1 or the same diameters for the circular cross-sectional glass fiber filaments of Comparative Example 2 and Comparative Example 3, in terms of tensile strength and impact strength, Example 1 is superior to Comparative Example 1 and Comparative Example 2 is superior to Comparative Example 3.

## Claims

1. A process for production of flat glass fiber-containing pellets (100; 110), wherein
a fiber bundle (21) obtained by aligning together a plurality of long flat glass fiber filaments (20) with flat cross-sections
is drawn through the through-hole (31) of a die having a through-hole formed therein, together with a molten thermoplastic resin (10a) and
the thermoplastic resin-attached fiber bundle obtained by drawing is then cut, **characterized in that**
said long flat glass fiber filaments (20) have an elliptical cross-sectional shape or a flat oval shape having linear sections in the long diameter direction and have a short diameter
of 4-15 µm, a long diameter of 15-80 µm and a compression in the range of 3-8, the long diameter and short diameter correspond, respectively, to length (A) of the long side (Ra) of rectangle (R), corresponding to the maximum dimension of the fiber cross-section, and to length (B) of the short side (Rb) of the same, where R is the rectangle of minimum area circumscribing the flat glass fiber filament (20), wherein the compression is the ratio of the long side length to the short side length (A/B) and
wherein
a binder component is attached around the periphery of the flat glass fiber filaments (20) at the interface between the flat glass fiber filaments (20) and the thermoplastic resin,
said binder component including a film forming agent comprising olefin-based resins, urethane resins, acrylic resins or epoxy resins.

2. The process according to claim 1, wherein the flat glass fiber filament (20) has a fiber length of 2-50 mm, and the number of flat glass fiber filaments aligned in the thermoplastic resin pellet is 500-8000.

3. The process according to claim 1 or 2, wherein the thermoplastic resin is a polyamide resin.

## Patentansprüche

1. Ein Verfahren zur Herstellung von flache Glasfaser enthaltenden Pellets (100; 110), wobei
ein Faserbündel (21), das durch gemeinsames Ausrichten mehrerer langer flacher Glasfaserfilamente (20) mit flachen Querschnitten erhalten wird,
zusammen mit einem geschmolzenen thermoplastischen Harz (10a) durch das Durchgangsloch (31) einer Düse gezogen wird, in der ein Durchgangsloch ausgebildet ist, und
das mit thermoplastischem Harz verbundene Faserbündel, das durch Ziehen erhalten wurde, dann geschnitten wird,
**dadurch gekennzeichnet, dass**
die langen flachen Glasfaserfilamente (20) eine elliptische Querschnittsform oder eine flache ovale Form mit linearen Abschnitten in der Richtung des langen Durchmessers aufweisen und einen kurzen Durchmesser von 4 bis 15 µm, einen langen Durchmesser von 15 bis 80 µm und eine Stauchung im Bereich von 3 bis 8 aufweisen, wobei der lange Durchmesser bzw. der kurze Durchmesser der Länge (A) der langen Seite (Ra) eines Rechtecks (R), entsprechend der maximalen Abmessung des Querschnitts der Faser, und der Länge (B) der kurzen Seite (Rb) desselben entsprechen, wobei R das Rechteck der minimalen Fläche, die das flache Glasfaserfilament (20) umschreibt ist, wobei die Stauchung das Verhältnis der Länge der langen Seite zu der Länge der kurzen Seite (A/B) ist, und
wobei
eine Bindemittelkomponente um die Peripherie der flachen Glasfaserfilamente (20) an der Grenzfläche zwischen den flachen Glasfaserfilamenten (20) und dem thermoplastischen Harz angebracht ist, wobei die Bindemittelkomponente ein filmbildendes Mittel umfassend auf Olefin basierende Harze, Urethanharze, Acrylharze oder Epoxidharze beinhaltet.

2. Das Verfahren gemäß Anspruch 1, wobei das flache Glasfaserfilament (20) eine Faserlänge von 2 bis 50 mm aufweist und die Anzahl von in dem thermoplastischen Harzpellet ausgerichteten flachen Glasfaserfilamenten 500 bis 8000 beträgt.

3. Das Verfahren gemäß Anspruch 1 oder 2, wobei das thermoplastische Harz ein Polyamidharz ist.

## Revendications

1. Procédé pour la production de pastilles contenant des fibres de verre plates (100 ; 110), dans lequel
un faisceau de fibres (21) obtenu en alignant ensemble une pluralité de longs filaments de fibres de verre plats (20) avec des sections transversales plates est étiré à travers le trou traversant (31) d'un moule ayant un trou traversant formé dans celui-ci, conjointement avec une résine thermoplastique fondue (10a), et
le faisceau de fibres attaché à la résine thermoplastique obtenu par étirage est ensuite coupé,
**caractérisé en ce que**
lesdits longs filaments de fibres de verre plats (20) ont une forme elliptique en
coupe transversale ou une forme plate ovale ayant des sections linéaires dans la direction du diamètre long et ont un diamètre court de 4 à 15 µm, un diamètre long de 15 à 80 µm et une compression située dans la plage allant de 3 à 8, le diamètre long et le diamètre court correspondent respectivement à la longueur (A) du côté long (Ra) d'un rectangle (R), correspondant à la dimension maximale de la section transversale de la fibre, et à la longueur (B) du côté court (Rb) de celui-ci, où R est le rectangle de surface minimale circonscrivant le filament de fibre de verre plat (20), où la compression est le rapport de la longueur du côté long à la longueur du côté court (A/B), et
dans lequel
un composant liant est attaché autour de la périphérie des filaments de fibres de
verre plats (20) à l'interface entre les filaments de fibres de verre plats (20) et la résine thermoplastique, ledit composant liant comprenant un agent filmogène comprenant des résines oléfiniques, des résine d'uréthane, des résines acryliques ou des résines époxy.

2. Procédé selon la revendication 1, dans lequel le filament de fibre de verre plat (20) a une longueur de fibre de 2 à 50 mm, et le nombre de filaments de fibres de verre plats alignés dans la pastille de résine thermoplastique est de 500 à 8 000.

3. Procédé selon la revendication 1 ou 2, dans lequel la résine thermoplastique est une résine de polyamide.
